# EUROPEAN PATENT APPLICATION

(11) **EP 1 310 641 A2**
(43) Date of publication of application: **14.05.2003**
(21) Application number: 02257584.9
(22) Date of filing: 01.11.2002
(51) Int. Cl.: F01N 3/28, B01D 53/94, C04B 30/02, C04B 14/46, C04B 14/20

(54) **High temperature resistant material**

(30) Priority: 09.11.2001 US 37691
(71) Applicant: ACS Industries, Inc., Woonsocket, RI 02895 (US)
(72) Inventor: Kircanski, Zlatomir, Woonsocket, RI 02895 (US)
(74) Representative: Coates, Ian Harold

(57) **Abstract**

High temperature resistant materials, one including between approximately 45 and 55 dry weight percent of high temperature resistant Silica fibers, and the other including between approximately 50 and 60 dry weight percent of magnesium silicate, that have improved physical properties, such as being capable of withstanding temperatures in excess of 2,000 °F, effective sealing, and being sufficiently resiliently compressible for cushioning a monolithic catalyst structure against breakage due to external physical shocks.

## Description

### BACKGROUND

### 1. Field of Invention.

The instant invention relates to high temperature resistant seals, such as those capable of withstanding continuous exposure to temperatures in excess of 2,000 °F, and more particularly to a high temperature resistant seal for a catalytic converter and to a method of making the seal.

### 2. State of the Art

Catalytic converters have generally been found to be effective for treating the exhaust gases of internal combustion engines. In this regard, a conventional catalytic converter generally comprises a relatively fragile monolithic catalyst structure including a ceramic monolithic support element for a catalyst, such as platinum, all disposed in a metal housing with inlet and outlet ends, and seals for supporting the catalyst structure in the housing. In this way, substantially all of the exhaust gases enter the housing and pass through the monolithic catalyst structure, and exit to the tailpipe. Until now, supporting seals for catalytic converters have generally been found to be less than satisfactory for cushioning the catalyst structure against breakage, resulting from physical shocks, and for sealing between the catalyst structure in the housing. It has been found that this is due partially to the fact that only a limited number of materials can withstand the working temperature of up to 2,000 °F found in a catalytic converter. One of the most common materials utilized for such seals is stainless steel wire which has been knitted, woven, or otherwise processed into a form that can be compacted into a desired configuration suitable for use in a catalytic converter. However, seals made from stainless steel wire are inherently porous, having void spaces which permit certain quantities of exhaust gases to pass through. Accordingly, there is a recognized need for a more effective seal for supporting the monolithic catalyst structure of a catalytic converter in the housing.

### OBJECTS AND SUMMARY OF THE INVENTION

Accordingly, it is a primary object of the instant invention to provide an effective seal for a catalytic converter which is capable of withstanding continuous exposure to temperatures in excess of 2,000 °F.

Another object of the instant invention is to provide an effective method of forming a high temperature seal which is capable of withstanding continuous exposure to temperatures in excess of 2,000 °F.

The instant invention provides a new high temperature seal which can be effectively utilized for sealing between the catalyst structure and the housing, and/or supporting the catalyst structure within the housing of a catalytic converter. The seal is made from a solid, compressible, high temperature resistant, refractory material, the main ingredient of which is a ceramic fiber capable of withstanding continuous exposure to temperatures in excess of 2,000 °F. The fibers are preferably relatively long refractory fibers, of relatively small diameters, and that are able to resiliently flex in order to absorb physical shocks to which the seal may be subjected.

In a preferred method of the present invention, the seal is fabricated by applying this refractory material in a wet form to the exterior surface of a monolithic catalyst structure and heating the catalyst structure and the seal material to a temperature effective to evaporate substantially all of the water from the seal material. In another aspect of the present invention, a method is provided in which a high temperature resistant seal is fabricated by pushing the monoliths through an injection molding cavity in which the monoliths are covered with an injected slurry and then dried.

A high temperature resistant material of the above-described type can be utilized for fabricating a supporting seal element which is capable of effectively sealing between the monolithic catalyst structure of a catalytic converter and the housing, and/or for supporting the monolithic catalyst structure in the housing. The high temperature resistant material is preferably formed around the monolithic catalyst structure, so that it encircles the latter to effect a seal between the catalyst structure and the housing. Further, a seal formed by this procedure is sufficiently resilient to enable it to cushion the monolithic catalyst structure against breakage due to externally applied physical shocks.

Other objects, features and advantages of the invention shall become apparent as the description proceeds when considered in connection with the accompanying illustrative drawings.

### BRIEF DESCRIPTION OF THE DRAWINGS

FIG. 1 is a perspective view of a catalytic converter which includes the high temperature resistant seal of the instant invention;
FIG. 2 is a sectional view taken along Line 2-2 in FIG. 1; and
FIG. 3 is an exploded perspective view of the catalytic converter.

### DETAILED DESCRIPTION OF THE INVENTION

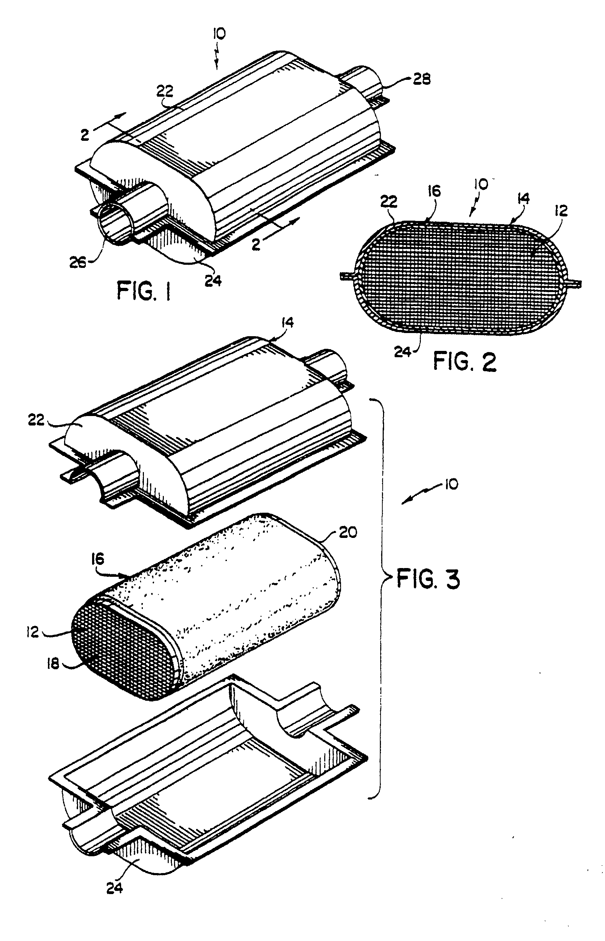

Referring now to the drawing, the catalytic converter of the instant invention is illustrated in FIGS. 1-3 and generally indicated at 10. The catalytic converter comprises a monolithic catalyst structure generally indicated at 12, an outer housing generally indicated at 14, and a high temperature resistant seal generally indicated at 16. The seal is operative for sealing between the monolithic catalyst structure and the housing, as well as for cushioning the monolithic catalyst structure, in order to prevent breakage resulting from externally applied physical shocks.

The monolithic catalyst structure is of conventional construction, and comprises a monolith element which is formed in a honeycomb-like configuration from a material such as a high temperature resistant ceramic. The catalyst structure further includes a catalyst, such as platinum, on the surfaces of the monolith element, so that high temperature gases exposed to those surfaces are catalytically converted as they pass through the monolithic catalyst structure, effectively reducing the environmentally harmful qualities of the exhaust gases emitted from the engine. The monolithic catalyst structure 12 has an inlet end 18 and an outlet end 20, and it is adapted to permit gases to pass freely from the inlet end to the outlet end, in order to expose the gases to the catalyst on the surfaces of the monolith element.

The housing 14 is also generally of a conventional configuration, and is formed from a suitable high temperature resistant metal, such as a high temperature resistant stainless steel. The housing includes first and second housing section halves 22 and 24, respectively, which are secured together by suitable means, such as welding, so that they cooperate to form a housing for containing the monolithic catalyst structure 12. The housing has an inlet end 26 and an outlet end 28, and is constructed so that gases entering the inlet end can pass through the monolithic catalyst structure from the inlet end 18 to the outlet end 20, and then out through the outlet end of the housing.

The seal is formed from a high temperature resistant material comprising between approximately 30 and 80 dry weight percent of high temperature resistant ceramic fibers, preferably silica or magnesium silicate fibers, and between approximately 5 and 30 dry weight percent of high aspect ratio vermiculite. The ceramic fibers are selected so that they are capable of withstanding continuous exposure to temperatures in excess of 2,000 °F, and the high aspect ratio vermiculite is selected so that it has an aspect ratio (ratio of length or width to thickness) of at least approximately 10 and a mean particle size of less than approximately 50 microns. The ceramic fibers are further selected so that they are preferably between approximately 6 mm and 50 mm in length, and between approximately 3 microns and 20 microns in thickness. The high temperature resistant material preferably further includes between approximately 20 and 50 dry weight percent of a low temperature expanding vermiculite; the high aspect ratio vermiculite is effective for binding the ceramic fibers and the low temperature expanding vermiculite together to maintain the seal material in a substantially solid compressible form. Further, the fibers are preferably relatively long and have a relatively small diameter, so that they are able to resiliently flex to absorb shocks applied to the seal. Suitable low temperature expanding vermiculites are available as aqueous dispersions sold under the VERXSPAND trademark (by W.R. Grace, Columbia, MD).

In one aspect of the present invention, a method is disclosed in which ceramic fibers, such as an amorphous silica (CAS # 7631-86-9) sold by AMETEK, were initially agitated alone. This is preferable because the ceramic fibers are generally manufactured in the form of a yarn/bundle with the fibers somewhat fixed to one another. The bundle is then chopped into staples, at approximately quarter inch intervals, and shipped to customers. These staple bundles are then agitated (dry) in a mixer/blender type apparatus, so as to separate the fibers. The mixer (Lancaster K-Lab model available from Kercher Industries, Lebanon, PA) is preferably equipped with a T-shaped rotor. However, agitating the fibers at a high rotor speed (e.g., 1750 rpm) would break the fibers instead of only separating them; if the fibers are broken, they will no longer have the ability to resiliently flex to absorb shocks applied to the seal. Therefore, the amorphous silica fibers are preferably agitated at a reduced speed of only about 500-1000 rpm, which is effective to separate and not break the fibers. Further, to increase the efficiency, the fibers are panned. The mixers utilized in the present examples had a high panning speed of approximately 50 rpm, and for these examples the pan speed was preferably kept at approximately 15-30 rpm. Also, due to the vermiculite's tendency to settle, it is preferred that the mixing be done at a tilt angle of approximately 0°- 45°, depending on the percentage of vermiculite present in relation to the entire mixture.

Accordingly, the amorphous silica fibers were initially agitated, at a rotor speed of approximately 500-1000 rpm, and a mixer tilt position of 0°, for approximately three minutes. The high aspect ratio vermiculite, such as that sold under the trademark HTS, a suspension having 7.5% or 15% by weight solids (available from W.R. Grace), and a solution of water, such as tap water, and, preferably, a suitable emulsifier, such as, but not limited to, methyl cellulose, sold under the trademark of METHOCEL, a polyethylene glycol alkyl aryl ether, were then added, and mixed for another three minutes. While the rotor and pan speeds remained the same, the mixer tilt position was set at an angle of approximately 15°, because of the presence of the vermiculite and its tendency to settle. The low temperature expanding vermiculite, such as VERXSPAND, was then added and mixed, for approximately three minutes, at approximately 1200-1400 rpm, and at a mixer tilt angle of approximately 30°. Finally, another three minutes of mixing was conducted, at the same mixing speed as the previous three minutes, but at a tilt angle of approximately 0°. The entire process took approximately twelve minutes to produce a homogeneous pasty blend. In this example 500 grams of 6 mm SIL fibers, 1,100 grams of HTS, 300 grams of VERXSPAND, 6.5 grams of METHOCEL, and 1,312 grams of tap water were used.

Similarly, in another aspect of the present invention, a method is disclosed in which ceramic fibers, such as a magnesium silicate (SiO₂ 72-77%, MgO 19-26%, trace elements 0-4%) sold under the trademark of ISOFRAX (by UNIFRAX CORP., Niagra Falls, NY), were initially agitated alone, for the same reasons as described above. With ceramic fibers of this type, a rotor speed of approximately 300-700 rpm is preferable. Further, the mixer tilt position was adjusted in the same manner as the previous method, approximately 0°, 15°, 30°, and 0°, as it was varied in the foregoing example depending on the particular addition or intermediate composition being mixed. After approximately one minute, the high aspect ratio vermiculite, such as HTS, and a solution of water, such as tap water, METHOCEL dissolved in water, and, preferably, a coagulant, such as vinegar, were added. After another minute of mixing, the low temperature expanding vermiculite, such as VERXSPAND, was added. After approximately three minutes, the ingredients were mixed one last time. The entire process took approximately eight minutes to produce a homogeneous pasty blend. In this example 1000 grams of 0.5in ISOFRAX (MS) fibers, 1,765 grams of HTS, 500 grams of VERXSPAND, 4.1 grams of vinegar, 9.6 grams of METHOCEL, and 1,921 grams of tap water were used.

It has been found that it may be preferable to add an emulsifying agent, of up to about 1% of the entire mixture; such as, for example only and not to be limited thereto, METHOCEL, in order to keep the water from separating prior to the heating stage. In any event, after the seal material has been formed in this manner it is applied to a monolithic structure to form a coating. A preferred method is described in co-pending application 09/772,701, filed 30 January 2001, the disclosure of which is incorporated herein by reference. The coated monolith is then dried, preferably by heating, to remove the water and form the seal. The housing is then assembled around the monolithic catalyst structure and the seal, and as a result of its resilient qualities, the seal can effectively conform to the internal configuration of the housing. It has been found that the high temperature resistant material of the instant invention is both resistant to high temperatures and capable of absorbing physical shocks, so as to protect the relatively fragile monolithic catalyst structure of the catalytic converter against breakage.

While there is shown and described herein certain specific structure embodying the invention, it will be manifest to those skilled in the art that various modifications and rearrangements of the parts may be made without departing from the spirit and scope of the underlying inventive concept, and that the same is not limited to the particular forms shown and described herein, except insofar as indicated by the scope of the appended claims.

## Claims

1. A solid, resilient, high temperature resistant material, fabricated by coating or molding an aqueous dispersion or suspension, comprising:
a. between approximately 30 and 80 dry weight percent of ceramic fibers, made of amorphous silica and/or magnesium silicate, capable of withstanding continuous exposure to temperatures in excess of 2,000 °F; and
b. between approximately 20 and 50 dry weight percent of a low temperature expanding vermiculite.

2. The material of claim 1, further comprising between approximately 5 and 30 dry weight percent of high aspect ratio vermiculite.

3. The material of claim 1, wherein said ceramic fibers are between approximately 6 mm and 50mm in length, and between approximately 3 microns and 20 microns in thickness.

4. A method of forming a solid, resilient, high temperature resistant material comprising the steps of:
a. forming an aqueous paste composition comprising between approximately 30 and 80 dry weight percent of ceramic fibers, made of amorphous silica and/or magnesium-silicate capable of withstanding continuous exposure to temperatures in excess of 2000 °F, and between approximately 20 and 50 dry weight percent of low temperature expanding vermiculite; and
b. heating said aqueous paste composition to evaporate substantially all of the water therefrom, and to thereby form said material.

5. The method of claim 4, further comprising, prior to step (b), the step of adding between approximately 5 and 60 dry weight percent of low temperature expanding vermiculite.

6. The method of claim 4, further comprising, prior to step (b), the step of adding between approximately 0.05 and 0.5 wet weight percent of an emulsifier and/or coagulant, and approximately 30 to 50 wet weight percent of water, so as to provide for a more homogeneous mixture.

7. The method of claim 4, further comprising, prior to step (a), the step of dry mixing said ceramic fibers alone, so as to separate said fibers from one another.

8. The method of claim 4, wherein said ceramic fibers are between approximately 6 mm and 50 mm in length, and between approximately 3 microns and 20 microns in thickness.

9. A method of making a seal for a catalytic converter, comprising the steps of:
a. placing a predetermined amount of ceramic fibers into a mixer/blender and agitating said ceramic fibers at a rotor speed of between approximately 500 rpm and 1000 rpm, a panning speed of between approximately 15 rpm and 30 rpm, at a mixer/blender tilt angle of between approximately 0 and 10 degrees, for between approximately one and three minutes, so as to provide effective separation of said fibers from one another;
b. adding high aspect ratio vermiculite, water, and an emulsifier and/or coagulant to said ceramic fibers, and mixing at a rotor speed of between approximately 500 rpm and 1000 rpm, a panning speed of between approximately 15 rpm and 30 rpm, at a mixer/blender tilt angle of between approximately 10 and 20 degrees, for between approximately one and three minutes, so as to create a first mixture;
c. adding a low temperature expanding vermiculite to said first mixture, and mixing at a rotor speed of between approximately 500rpm and 1000 rpm, a panning speed of between approximately 15rpm and 30rpm, at a mixer/blender tilt angle of between approximately 20 and 30 degrees, for between approximately one and three minutes, so as to create a second mixture; and
d. mixing said second mixture, at a rotor speed of between approximately 500rpm and 1000 rpm, a panning speed of between approximately 15rpm and 30rpm, at a mixer/blender tilt angle of between approximately 0 and 10 degrees, for between approximately one and three minutes, so as to produce a homogeneous pasty blend.

10. The method of claim 9, further comprising the step of applying a portion of said homogeneous pasty blend as a thick paste to the exterior surface of a monolithic catalyst structure.

11. The method of claim 10, further comprising the step of applying heat to said thick paste and said monolithic catalyst structure, so as to evaporate substantially all of the water.

12. The method of claim 9, further comprising the step of applying a portion of said homogeneous pasty blend as a thick paste to an injection molding tube covering a monolithic catalyst structure.

13. The method of claim 12, further comprising the step of applying heat to said thick paste and said monolithic catalyst structure, so as to evaporate substantially all of the water.

14. The method of claim 9, further comprising, prior to step (d), the step of adding a an emulsifying agent, of approximately less than, or equal to, one percent of said second mixture in order to keep the water from separating prior to heating.

15. The method of claim 9, wherein said ceramic fibers are between approximately 6 mm and 50 mm in length, and between approximately 3 microns and 20 microns in thickness.

16. A catalytic converter having a monolithic catalyst, an outer housing, and a seal, for sealing between the monolithic catalyst and the outer housing, wherein the seal is made from a solid, resilient, high temperature resistant material, fabricated by coating or molding an aqueous dispersion of suspension, comprising:
a. between approximately 30 and 80 dry weight percent of ceramic fibers, made of amorphous silica and/or magnesium silicate, capable of withstanding continuous exposure to temperatures in excess of 2,000 °F; and
b. between approximately 20 and 50 dry weight percent of a low temperature expanding vermiculite.

17. The catalytic converter of claim 16, further comprising between approximately 5 and 30 dry weight percent of high aspect ratio vermiculite.

18. The catalytic converter of claim 16, wherein said ceramic fibers are between approximately 6 mm and 50 mm in length, and between approximately 3 microns and 20 microns in thickness.
